# EUROPEAN PATENT SPECIFICATION

(11) **EP 3 264 057 B1**
(45) Date of publication and mention of the grant of the patent: **19.06.2019**
(21) Application number: 16305796.1
(22) Date of filing: 29.06.2016
(51) Int. Cl.: G01K 1/14, G01K 13/04, F16D 66/00

(54) **SYSTEM FOR MEASURING A TEMPERATURE OF A MOVING PART, MOTOR BOGIE COMPRISING SUCH A MEASUREMENT SYSTEM AND ASSOCIATED RAILWAY VEHICLE**
SYSTEM ZUM MESSEN EINER TEMPERATUR EINES BEWEGLICHEN TEILS, MOTORDREHGESTELL MIT SOLCH EINEM MESSSYSTEM UND ZUGEHÖRIGES SCHIENENFAHRZEUG
SYSTÈME DE MESURE DE TEMPÉRATURE D'UNE PIÈCE MOBILE, BOGIE MOTEUR COMPRENANT UN TEL SYSTÈME DE MESURE ET VÉHICULE FERROVIAIRE ASSOCIÉ

(43) Date of publication of application: 03.01.2018
(73) Proprietor: ALSTOM Transport Technologies, 93400 Saint-Ouen (FR)
(72) Inventor: BROWNE, John-Enzo, 22946 Trittau (DE); KONSEK, Hanke, 38102 Braunschweig (DE); CHAPUIS, Gautier, 38106 Braunschweig (DE)
(74) Representative: Lavoix

(56) References cited:
- WO-A1-2014/131688
- GB-A- 2 319 574
- US-A- 5 213 417

## Description

The present invention concerns a motor bogie for a railway vehicle, comprising at least a wheel axle and a bogie frame for rotationally guiding the wheel axle, the wheel axle comprising a brake disk, the motor bogie comprising a measurement system for measuring a temperature of the brake disk. The present invention also concerns a railway vehicle comprising such a bogie.

Many mechanical systems comprise a frame supporting some moving parts whose temperature must be checked while the part is moving with respect to the frame. For example, it is often necessary to measure the temperature of brake disks during operation in order to monitor braking performances. Appropriate measurement systems exist, allowing for relative movement between a temperature sensor and the part whose temperature is measured.

In order to allow such relative movements, measurement systems use specific positioning devices that maintain a wear portion of a steel part against the moving part. However, such positioning systems are often complex and expensive to manufacture. Additionally, existing positioning devices do not ensure that the contact surface between the wear portion and the moving part nor the relative forces are kept constant if the relative positions of both parts are modified. Such variations may lead to undesired measurement discrepancies.

Document WO 2014/131688 A1 describes a motor chassis for a railway vehicle, comprising a temperature sensor.

Document GB 2 319 574 A describes a temperature measurement system. Document US 5, 213, 417 A describes another temperature measurement system.

The aim of the invention is to provide a temperature measurement system that is easier and cheaper to produce than existing measurement systems. Another aim of the invention is to provide a temperature measurement system that is more precise than existing measurement systems, in particular when facing a relative movement between the moving part and the frame.

To this end, the invention concerns a motor bogie according to claim 1.

Thanks to the invention, a temperature sensor may be effectively positioned against a moving part with minimal measurement variations when relative movements occur between the moving part and a frame. Also thanks to the invention, the positioning system used in this aim is very easy and inexpensive to manufacture.

Further aspects of the invention that are advantageous but not compulsory are specified in claims 2 to 7.

The invention also concerns a railway vehicle comprising such a motor bogie.

The invention will now be explained, as an illustrative example and without restraining the object of the invention, in correspondence with the associated figures in which:
- figure 1 represents a schematics of part of a motor bogie comprising a moving part and a positioning system for positioning a temperature sensor against the moving part,
- figure 2 represents an elevated view of the positioning system of figure 1, and
- figure 3 represents a side view of the positioning system of figure 1.

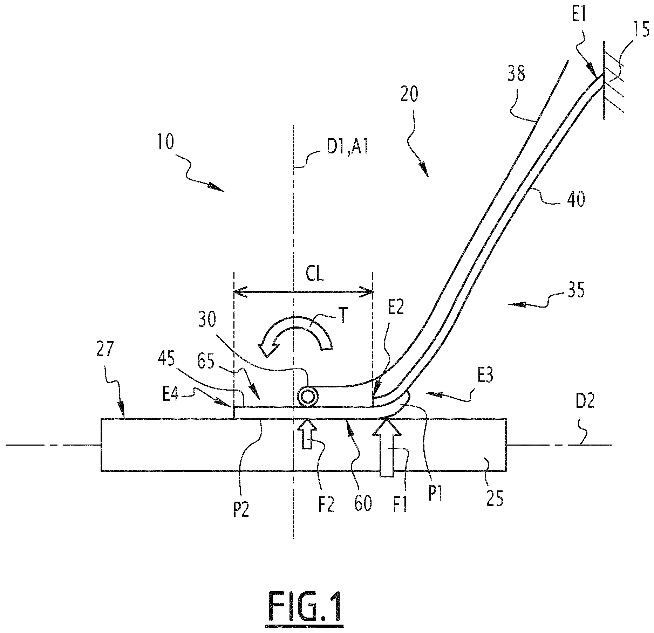

Part of a motor bogie 10 is represented on figure 1.

The motor bogie 10 is, for example, integrated in a railway vehicle.

The motor bogie 10 comprises a frame 15, a wheel axle, and a measurement system 20.

The bogie frame 15 is configured for supporting a usable volume of the vehicle, such as a passenger compartment.

The bogie frame 15 is configured for rotationally guiding the wheel axle with respect to the bogie frame 15. For example, the bogie frame 15 comprises rolling bearings allowing for relative rotation between the wheel axle and bogie frame 15.

The wheel axle comprises at least two wheels and a brake disk 25. The wheel axle is rotationally movable with respect to frame 15 around an axis A1. The axis A1 is sensibly horizontal when the railway vehicle is in use.

Furthermore, the wheel axle is translationally movable with respect to the bogie frame 15 along a first direction D1. The first direction D1 is parallel to the axis A1, and therefore horizontal.

In another embodiment, the wheel axle is translationally movable with respect to the bogie frame 15 along a second direction D2. The second direction D2 is perpendicular to the axis A1 and to the first direction D1. For example, the second direction D2 is vertical when the vehicle is in use.

The wheel axle is, for example, elastically linked to the frame 15 by a suspension system allowing for relative translations between the bogie frame 15 and the wheel axle. The suspension system is, furthermore, able to damp seven movements between the bogie frame 15 and the wheel axle.

The brake disk 25 is delimited, along the axis A1, by two side faces 27. Each side face 27 is a disk perpendicular to the axis A1 of the wheel axle. For example, the side faces 27 are meant to be clutched between two brake disk pads in order to slow the railway vehicle.

The measurement system 20 is configured for measuring a temperature of a moving part moving with respect to the frame 15. The moving part is, for example, the brake disk 25. The measurement system 20 is therefore configured for measuring a temperature of the brake disk 25.

The measurement system 20 comprises a temperature sensor 30, a processing unit, and a positioning device 35.

The temperature sensor 30 is able to convert a temperature of the temperature sensor 30 into an electric signal.

For example, the temperature sensor 30 generates a voltage having a value depending on the temperature of the temperature sensor 30.

In the embodiment represented on the figures, the temperature sensor 30 is a thermocouple. Thermocouples are electrical devices wherein an electrical junction between two different conductors produces a temperature-dependent voltage at the result of the thermoelectric effect.

In another embodiment, the temperature sensor 30 has an electrical resistance whose value depends on the temperature of the temperature sensor 30.

The temperature sensor 30 is electrically connected to the processing unit through an electrical conductor 38. The electrical conductor 38 is, for example, a copper wire.

The processing unit converts the electrical signal into a piece of information understandable by a user, for example a digital value of the measured temperature. The processing unit is, for example, secured to the bogie frame 15.

The positioning system 35 is configured for positioning the temperature sensor 30 with respect to the moving part. A working position and a relaxed position are defined for the positioning device 35.

When the positioning device 35 is in a working position, the positioning device 35 is secured to the bogie frame 15. Furthermore, when the positioning device 35 is in a working position, the positioning device 35 is in contact with the moving part.

The positioning device 35 is represented in the working position on figure 1.

When the positioning device 35 is in the relaxed position, the positioning device 35 is not secured to the bogie frame 15 and is not in contact with the moving part. In particular, when the positioning device 35 is in the relaxed position, no external forces other than to the weight of the positioning device are applied to the positioning device 35. For example, the positioning device 35 is in the relaxed position when the positioning device 35 lies on a flat support such as a table.

The positioning device 35 comprises a first spring blade 40 and a second spring blade 45. Both spring blades 40, 45 are made of steel.

The first spring blade 40 is rectangular. Preferably, the first spring blade 40 is parallel to the second spring blade when the positioning device 35 is in the relaxed position.

When the positioning device 35 is in the working position, the first spring blade extends along a direction forming an angle comprised between 0 degrees and 75 degrees with the first direction D1, preferably between 35 and 55 degrees. A first thickness, a first length and a first width are defined for the first spring blade 40.

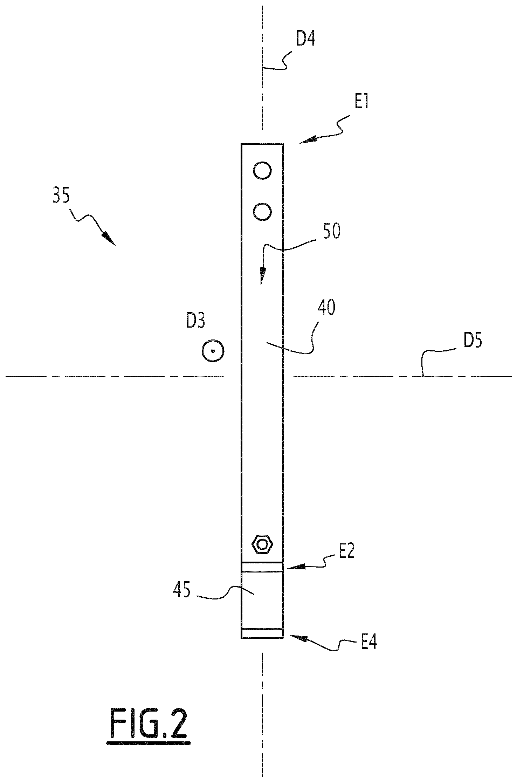

The positioning device has been represented in the relaxed position on figure 2. Each thickness, each length and each width of the positioning device 35 are measured when the positioning device 35 is in the relaxed position. A third direction D3, a fourth direction D4 and a fifth direction D5 are defined when the positioning device 35 is in the relaxed position. Each of the third direction D3, the fourth direction D4 and the fifth direction D5 are perpendicular to each other.

Of the first thickness, the first length and the first width, the first thickness is the smallest dimension. The first thickness is measured in the third direction D3. The first thickness is superior or equal to 0.4 mm and inferior or equal to 0.6 mm.

The first thickness is uniform. This means that the first thickness has a value that does not depend on the point of the first spring blade 40 in which the first thickness is measured.

The first length is measured along the fourth direction D4. Of the first thickness, the first length and the first width, the first length is the greatest dimension. The first length is comprised between 50 mm and 500 mm. For example, the length of the first spring blade is equal to 100 mm. In order to keep constant the force generated by bending the spring blade, the first thickness of the first spring blade 40 is chosen as a function of the first length, the first thickness increasing with the first length.

The first width is measured along the fifth direction D5. The first width is, for example, equal to 12 mm.

The first spring blade 40 has a first extremity E1 and a second extremity E2. The first length is measured between the first extremity E1 and the second extremity E2 when the positioning device 35 is in the relaxed position.

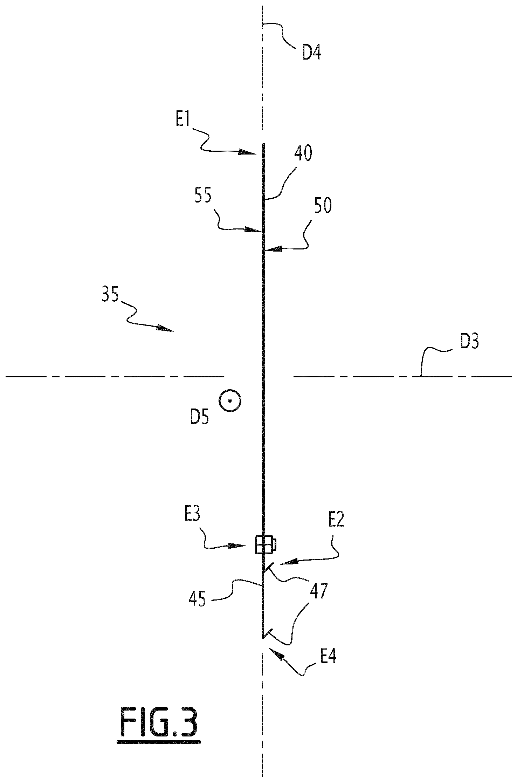

As represented on figure 3, the first spring blade 40 is planar when the positioning device 35 is in the relaxed position. For example, the first spring blade 40 is made by cutting a flat piece of sheet steel perpendicular to the third direction D3 and having the first thickness.

When the positioning device 35 is in the working position, the first extremity E1 is secured to the bogie frame 15. For example, the first extremity E1 is bolted to the bogie frame 15.

When the positioning device 35 is in the working position, the second extremity E2 is in contact with the second spring blade 45.

As visible on figure 3, a metal tongue 47 extends diagonally, from the second extremity E2, along a diagonal direction comprised in a plane defined by the third direction D3 and the fourth direction D4. The metal tongue 47 is rectangular. The metal tongue 47 is part of the first spring blade 40. A part of the first spring blade 40 is folded A at extremity around round an axle parallel to the width of the first spring blade so as not to present a sharp edge. The first spring blade 40 has a top face 50 and a bottom face 55. The first thickness is measured between the top face 50 and the bottom face 55. Both the top face 50 and the bottom face 55 are perpendicular to the third direction D3 when the positioning device 35 is in the relaxed position.

The bottom face 55 is in contact with the second spring blade 45.

The second spring blade 45 and the first spring blade 40 are pressed against and overlap each other.

When the positioning device 35 is in a working position, the first spring blade 40 presses at least a portion of the second spring blade 45 against the moving part.

For example, when the positioning device 35 is in a working position, the first spring blade 40 presses the second spring blade 45 against a side face 27 of the brake disk 25.

The second spring blade 45 is rectangular. For example, when the positioning device is in the relaxed position, the second spring blade 45 is a parallelepiped.

When the positioning device is in the relaxed position, the second spring blade 45 is planar.

A second thickness, a second length and a second width are defined for the second spring blade 45.

The second thickness is measured along the third direction D3. The second thickness is inferior or equal to 0.2 mm. For example, the second thickness is equal to 0,1 mm.

The second length is measured along the fourth direction D4.

The second width is measured along the fifth direction D5. The second width is equal to the first width.

The second spring blade 45 is parallel to the first spring blade 40. For example, when the positioning device 35 is in the relaxed position, each face of the first spring blade 40 is parallel to a corresponding face of the second spring blade 45.

The second spring blade 45 has a third extremity E3 and a fourth extremity E4. The second length is measured between the third extremity E3 and the fourth extremity E4.

The third extremity E3 is secured to the second extremity E2. For example, the third extremity E3 and the second extremity E2 are bolted together. In another embodiment, the third extremity E3 and the second extremity E2 are welded together or fastened together using rivets.

The fourth extremity E4 also comprises a metal tongue 47 similar to the metal tongue 47 of the second extremity E2.

The second spring blade 45 has a first face 60 and a second face 65. The second thickness is measured between the first face 60 and the second face 65. Each of the first face 60 and the second face 65 is parallel to the other.

The first face 60 is in contact with the brake disk 25. The temperature sensor 30 is secured to the second face 65. For example, the temperature sensor 30 is welded to the second face 65.

The second spring blade 45 comprises a first portion P1 and a second portion P2. The second spring blade 45 is formed by the reunion of the first portion P1 and the second portion P2.

The first portion P1 is in contact with the first spring blade 40. The first portion P1 is delimited by the second portion P2, along the fourth direction D4, when the positioning device is in the relaxed position.

The second portion P2 is not in contact with the first spring blade 40. The second portion P2 is the portion of the second spring blade 45 that protrudes beyond the second extremity E2. In other words, the second portion P2 is delimited, along the fourth direction D4, by the second extremity E2.

The second portion P2 is in contact with the moving part when the positioning device 35 is in the working position. When the moving part is the brake disk 25, the second portion P2 is therefore in contact with the brake disk 25.

The second portion P2 is delimited, along the third direction D3, when the positioning device 35 is in the relaxed position, by the second extremity E2 and the fourth extremity E4. The second portion P2 has a third length measured between the second extremity E2 and the fourth extremity E4. The third length is superior or equal to 15 mm. The third length is inferior or equal to 25 mm.

The temperature sensor 30 is fastened to the center of the second portion P2. For example, a distance between the temperature sensor 30 and the second extremity E2, measured along the third direction when the positioning device 35 is in the relaxed position, is equal to half the third length.

A contact length CL is defined for the second portion P2. The contact length is defined, along the third direction D3 and when the positioning device 35 is in the relaxed position, as the length along which the surface of the second portion P2 that is in contact with the moving part when the positioning device 35 is in the working position. The contact length is comprised between 15 mm and 25 mm.

When the positioning device 35 is in the working position, the second spring blade 45 is bent around the second extremity E2. In particular, the second portion P2 is flat and the whole first face 60 of the second portion P2 is pressed against a side face 27 of the brake disk 25. The second portion P2 is bent, the first face 60 being on an outside of the bend and the second face 65 being on an inside of the bend.

When the positioning device 35 is in the working position, the brake disk 25 applies a first force F1 on the first portion P1 and a second force F2 on the second portion P2.

The first force F1 depends on the relative position of the moving part, that is the brake disk 25, and the bogie frame 15. The first force F1 causes the second spring blade 45 to bend around the second extremity, thereby generating a torque T. The torque T causes the second portion P2 to be pressed against the side face 27.

The second force F2 depends primarily on the torque T. As torque T varies only to a minor extent when the brake disk 25 translates along the first direction with respect to the bogie frame 15, the second force F2 is constant or close to constant when the vehicle is operated.

Since the second force F2 is constant or close to constant, the measurement system 20 is more reliable than the existing measurement systems.

Furthermore, the positioning system 35 is very simple and, therefore, easy and cheap to fabricate. The overall cost of the measurement system 20 is, therefore, reduced.

## Claims

1. A motor bogie (10) for a railway vehicle, comprising at least a wheel axle and a bogie frame (15) for rotationally guiding the wheel axle, the wheel axle comprising a brake disk (25), wherein the motor bogie (10) comprises a measurement system (20) for measuring a temperature of the brake disk (25), the measurement system comprising a temperature sensor (30), **characterized in that** the measurement system comprises a positioning device (35) for positioning the temperature sensor (30) with respect to the brake disk (25), the positioning device (35) being secured in a working position to the bogie frame (15), wherein
- the positioning device (35) comprises a first spring blade (40) and a second spring blade (45), both spring blades (40, 45) being made of steel,
- the first spring blade (40) has a first extremity (E1) and a second extremity (E2),
- the second spring blade (45) has a third extremity (E3) fixed to the second extremity (E2),
- the first extremity (E1) is fixed to the bogie frame (15),
- at least a portion (P2) of the second spring blade (45) is pressed by the first spring blade (40) against the brake disk (25) when the positioning device (35) is in the working position, and
- the temperature sensor (30) is secured to the second spring blade (45).

2. A motor bogie (10) according to claim 1, wherein
- the second spring blade (45) has a first face (60) and a second face (65) parallel to the first face (60),
- the first face (60) is in contact with the brake disk (25) when the positioning device (35) is in the working position and
- the temperature sensor (30) is secured to the second face (65).

3. A motor bogie (10) according to claim 1 or 2, wherein the first spring blade (40) has a thickness comprised between 0.4 millimeters and 0.6 millimeters and the second spring blade (45) has a thickness less than 0.2 millimeters.

4. A motor bogie (10) according to any of claims 1 to 3, the second spring blade (45) having a first portion (P1) and a second portion (P2), the first portion (P1) being in contact with the first spring blade (40) and the second portion (P2) not being in contact with the first spring blade (40), the second portion (P2) being in contact with the brake disk (25) when the positioning device (35) is in the working position, wherein the first spring blade (40) has a length, measured between the first extremity (E1) and the second extremity (E2), comprised between 50 millimeters and 500 millimeters and the second portion (P2) has a length, measured between the second extremity (E2) and the fourth extremity (E4), comprised between 15 millimeters and 25 millimeters.

5. A motor bogie (10) according to claim 4, wherein, when the positioning device (35) is in the working position, a contact length (CL) of the second portion (P2) against the brake disk (25) is comprised between 15 millimeters and 25 millimeters.

6. A motor bogie (10) according to any of claims 1 to 5, wherein, the positioning device (35) is movable between a relaxed position, in which no external forces other than the weight of the positioning device (35) are applied to the positioning device (35) and a working position in which the positioning device (35) is secured to the frame (15) and in contact with the brake disk (25), and wherein when the positioning device (35) is in the relaxed position, both spring blades (40, 45) are planar and, when the positioning device (35) is in the working position, the second spring blade (45) is bent around the second extremity (E2) of the first spring blade (45).

7. A motor bogie (10) according to any of claims 1 to 6, wherein the third extremity (E3) and the second extremity (E2) are bolted together.

8. A railway vehicle comprising a motor bogie (10) according to any one of claims 1 to 7.

## Patentansprüche

1. Motordrehgestell (10) für ein Schienenfahrzeug, umfassend mindestens eine Radachse und einen Drehgestellrahmen (15), um drehbar die Radachse zu führen, wobei die Radachse eine Bremsscheibe (25) umfasst, wobei das Motordrehgestell (10) ein Messsystem (20) zum Messen einer Temperatur auf der Bremsscheibe (25) umfasst, wobei das Messsystem einen Temperatursensor (30) umfasst, **dadurch gekennzeichnet, dass** das Messsystem eine Positionierungsvorrichtung (35) umfasst, um den Temperatursensor (30) mit Bezug auf die Bremsscheibe (25) zu positionieren, wobei die Positionierungsvorrichtung (35) in einer Arbeitsposition an den Drehgestellrahmen (15) befestigt ist, wobei
- die Positionierungsvorrichtung (35) ein erstes Federblatt (40) und ein zweites Federblatt (45) umfasst, wobei beide Federblätter (40, 45) aus Stahl hergestellt sind,
- das erste Federblatt (40) ein erstes Ende (E1) und ein zweites Ende (E2) aufweist,
- das zweite Federblatt (45) ein drittes Ende (E3) aufweist, das an das zweite Ende (E2) fixiert ist
- das erste Ende (E1) an den Drehgestellrahmen (15) fixiert ist,
- mindestens ein Abschnitt (P2) des zweiten Federblatts (45) vom ersten Federblatt (40) gegen die Bremsscheibe (25) gedrückt wird, wenn die Positionierungsvorrichtung (35) in der Arbeitsposition ist und
- der Temperatursensor (30) an das zweite Federblatt (45) befestigt ist.

2. Motordrehgestell (10) nach Anspruch 1, wobei
- das zweite Federblatt (45) eine erste Seite (60) und eine zweite Seite (65) parallel zur ersten Seite (60) aufweist,
- die erste Seite (60) in Kontakt mit der Bremsscheibe (25) ist, wenn die Positionierungsvorrichtung (35) in der Arbeitsposition ist und
- der Temperatursensor (30) an die zweite Seite (65) befestigt ist.

3. Motordrehgestell (10) nach Anspruch 1 oder 2, wobei das erste Federblatt (40) eine Dicke aufweist, die im Bereich zwischen 0,4 Millimeter und 0,6 Millimeter liegt und das zweite Federblatt (45) eine Dicke von weniger als 0,2 Millimeter aufweist.

4. Motordrehgestell (10) nach einem der Ansprüche 1 bis 3, wobei das zweite Federblatt (45) einen ersten Abschnitt (P1) und einen zweiten Abschnitt (P2) aufweist, wobei der erste Abschnitt (P1) in Kontakt mit dem ersten Federblatt (40) ist und der zweite Abschnitt (P2) nicht in Kontakt mit dem ersten Federblatt (40) ist, wobei der zweite Abschnitt (P2) in Kontakt mit der Bremsscheibe (25) ist, wenn die Positionierungsvorrichtung (35) in der Arbeitsposition ist, wobei das erste Federblatt (40) eine Länge aufweist, gemessen zwischen dem ersten Ende (E1) und dem zweiten Ende (E2), die im Bereich zwischen 50 Millimeter und 500 Millimeter liegt, und der zweite Abschnitt (P2) eine Länge aufweist, gemessen zwischen dem zweiten Ende (E2) und dem vierten Ende (E4), die im Bereich zwischen 15 Millimeter und 25 Millimeter liegt.

5. Motordrehgestell (10) nach Anspruch 4, wobei, wenn die Positionierungsvorrichtung (35) in der Arbeitsposition ist, eine Kontaktlänge (CL) des zweiten Abschnitts (P2) gegen die Bremsscheibe (25) im Bereich zwischen 15 Millimeter und 25 Millimeter liegt.

6. Motordrehgestell (10) nach einem der Ansprüche 1 bis 5, wobei die Positionierungsvorrichtung (35) zwischen einer Ruheposition, in der keine externen Kräfte außer dem Gewicht der Positionierungsvorrichtung (35) auf die Positionierungsvorrichtung (35) angewendet werden, und einer Arbeitsposition bewegt werden kann, in der die Positionierungsvorrichtung (35) an den Rahmen (15) befestigt und in Kontakt mit der Bremsscheibe (25) ist, und wobei, wenn die Positionierungsvorrichtung (35) in der Ruheposition ist, beide Federblätter (40, 45) planar sind, und, wenn die Positionierungsvorrichtung (35) in der Arbeitsposition ist, das zweite Federblatt (45) um das zweite Ende (E2) des ersten Federblatts (45) gebogen ist.

7. Motordrehgestell (10) nach einem der Ansprüche 1 bis 6, wobei das dritte Ende (E3) und das zweite Ende (E2) miteinander durch Bolzen verbunden sind.

8. Schienenfahrzeug, umfassend ein Motordrehgestell (10) nach einem der Ansprüche 1 bis 7.

## Revendications

1. Bogie moteur (10) destiné à un véhicule ferroviaire, comprenant au moins un essieu de roue et un châssis de bogie (15) destiné à guider de manière rotationnelle l'essieu de roue, l'essieu de roue comprenant un disque de frein (25), le bogie moteur (10) comprenant un système de mesure (20) destiné à mesurer une température du disque de frein (25), le système de mesure comprenant un capteur de température (30), **caractérisé en ce que** le système de mesure comprend un dispositif de positionnement (35) destiné à positionner le capteur de température (30) par rapport au disque de frein (25), le dispositif de positionnement (35) étant fixé dans une position de fonctionnement sur le châssis de bogie (15), dans lequel
- le dispositif de positionnement (35) comprend une première lame de ressort (40) et une seconde lame de ressort (45), les deux lames de ressort (40, 45) étant composées d'acier,
- la première lame de ressort (40) possède une première extrémité (E1) et une seconde extrémité (E2),
- la seconde lame de ressort (45) possède une troisième extrémité (E3) fixée sur la seconde extrémité (E2),
- la première extrémité (E1) est fixée sur le châssis de bogie (15),
- au moins une partie (P2) de la seconde lame de ressort (45) est appuyée par la première lame de ressort (40) contre le disque de frein (25) lorsque le dispositif de positionnement (35) se trouve dans la position de fonctionnement, et
- le capteur de température (30) est fixé sur la seconde lame de ressort (45).

2. Bogie moteur (10) selon la revendication 1, dans lequel
- la seconde lame de ressort (45) possède une première face (60) et une seconde face (65) parallèle à la première face (60),
- la première face (60) est en contact avec le disque de frein (25) lorsque le dispositif de positionnement (35) se trouve dans la position de fonctionnement, et
- le capteur de température (30) est fixé sur la seconde face (65).

3. Bogie moteur (10) selon la revendication 1 ou 2, dans lequel la première lame de ressort (40) possède une épaisseur comprise entre 0,4 millimètre et 0,6 millimètre et la seconde lame de ressort (45) possède une épaisseur inférieure à 0,2 millimètre.

4. Bogie moteur (10) selon l'une quelconque des revendications 1 à 3, la seconde lame de ressort (45) ayant une première partie (P1) et une seconde partie (P2), la première partie (P1) étant en contact avec la première lame de ressort (40) et la seconde partie (P2) n'étant pas en contact avec la première lame de ressort (40), la seconde partie (P2) étant en contact avec le disque de frein (25) lorsque le dispositif de positionnement (35) se trouve dans la position de fonctionnement, dans lequel la première lame de ressort (40) possède une longueur, mesurée entre la première extrémité (E1) et la seconde extrémité (E2), comprise entre 50 millimètres et 500 millimètres, et la seconde partie (P2) possède une longueur, mesurée entre la seconde extrémité (E2) et la quatrième extrémité (E4), comprise entre 15 millimètres et 25 millimètres.

5. Bogie moteur (10) selon la revendication 4, dans lequel, lorsque le dispositif de positionnement (35) se trouve dans la position de fonctionnement, une longueur de contact (CL) de la seconde partie (P2) contre le disque de frein (25) est comprise entre 15 millimètres et 25 millimètres.

6. Bogie moteur (10) selon l'une quelconque des revendications 1 à 5, dans lequel le dispositif de positionnement (35) peut se déplacer entre une position détendue, dans laquelle aucune force externe autre que le poids du dispositif de positionnement (35) n'est appliquée au dispositif de positionnement (35), et une position de fonctionnement dans laquelle le dispositif de positionnement (35) est fixé sur le châssis (15) et en contact avec le disque de frein (25), et dans lequel, lorsque le dispositif de positionnement (35) se trouve dans la position détendue, les deux lames de ressort (40, 45) sont planes et, lorsque le dispositif de positionnement (35) se trouve dans la position de fonctionnement, la seconde lame de ressort (45) est cintrée autour de la seconde extrémité (E2) de la première lame de ressort (45).

7. Bogie moteur (10) selon l'une quelconque des revendications 1 à 6, dans lequel la troisième extrémité (E3) et la seconde extrémité (E2) sont boulonnées ensemble.

8. Véhicule ferroviaire comprenant un bogie moteur (10) selon l'une quelconque des revendications 1 à 7.
